# EUROPÄISCHE PATENTANMELDUNG

(11) **EP 1 889 866 A1**
(43) Veröffentlichungstag der Anmeldung: **20.02.2008**
(21) Anmeldenummer: 07011543.1
(22) Anmeldetag: 13.06.2007
(51) Int. Cl.: C08G 65/46

(54) **Verfahren zur Herstellung von Polyoxyalkylenglykolethern unter Verwendung von alkoxylierten Alkylphenol-Aldehydharzen als Demulgatoren**

(30) Priorität: 18.08.2006 DE 102006038851
(71) Anmelder: Clariant International Ltd., 4132 Muttenz (CH)
(72) Erfinder: Snell, Alexander, Dr., 4055 Basel (CH); Cohrs, Carsten, Dr., 60316 Frankfurt am Main (DE); Oberendfellner, Gabriele, 84508 Burgkirchen (DE); Freudl, Hildegard, 84508 Burgkirchen (DE)
(74) Vertreter: Mikulecky, Klaus

(57) **Zusammenfassung**

Gegenstand der Erfindung ist ein Verfahren zur Herstellung von Polyoxyalkylenglykolmonoethern und/oder -diethern durch Umsetzung eines Alkoholats mit einem Alkylierungsmittel, dadurch gekennzeichnet, dass man der Mischung aus Alkoholat, Alkylierungsmittel und entstandenem Polyoxyalkylenglykolether Wasser und eine Verbindung der Formel 1 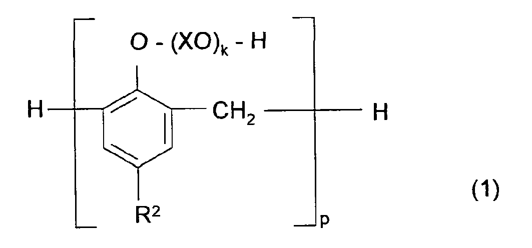 zusetzt, in der
R² einen geradkettigen oder verzweigten C₁- bis C₂₀-Alkylrest bezeichnet,
p für eine Zahl von 1 bis 75 steht,
X eine oder verschiedene 1,2-Alkylengruppen mit 2 bis 4 C-Atomen, und
k eine Zahl von 1 bis 200 bedeuten.

## Beschreibung

Die vorliegende Erfindung betrifft ein Verfahren zur Herstellung von Polyoxyalkylenglykolethern unter Verwendung von Emulsionsspaltern.

Die Veretherung von freien OH-Gruppen in Polyoxyalkylenglykolen erfolgt großtechnisch im Allgemeinen nach der Synthese von Williamson (K. Weissermel, H. J. Arpe "Industrielle Organische Chemie", 1998, Seite 179) durch Umsetzung eines Polyoxyalkylenglykols R-OH mit Natriumhydroxid oder Natrium zum entsprechenden Alkoholat und anschließender Alkylierung mit einem Alkylchlorid R¹-Cl gemäß folgender Reaktionsgleichungen:

R-OH + NaOH → R-ONa + H₂O (I)

R-ONa + Cl-R¹ → R-O-R¹ + NaCl (II)

Die sich bildenden Salze werden durch Zugabe von Wasser in Lösung gebracht und anschließend durch eine Phasentrennung vom Produkt isoliert. Diese zeitaufwendige wässrige Phasentrennung kann insbesondere bei Mischpolyoxyalkylenglykoldialkylethern oder reinen Polypropylenglykoldialkylethern jedoch mehrere Stunden in Anspruch nehmen und führt dadurch zu längeren Kesselbelegungszeiten und entsprechend höheren Kosten.

Aufgabe der vorliegenden Erfindung war es demzufolge, ein Verfahren bereit zustellen, mit dem die Phasentrennung des Wassers von Polyoxyalkylenglykoldialkylethern schneller erfolgt.

Überraschenderweise wurde gefunden, dass bestimmte alkoxylierte Alkylphenol-Formaldehydharze zur Beschleunigung der Phasentrennung geeignet sind, ohne einen nachteiligen Einfluss auf das erwünschte Reaktionsprodukt zu haben.

Gegenstand der Erfindung ist somit ein Verfahren zur Herstellung von Polyoxyalkylenglykolmonoethern und/oder -diethern durch Umsetzung eines Alkoholats mit einem Alkylierungsmittel, dadurch gekennzeichnet, dass man der Mischung aus Alkoholat, Alkylierungsmittel und entstandenem Polyoxyalkylenglykolether Wasser und eine Verbindung der Formel 1 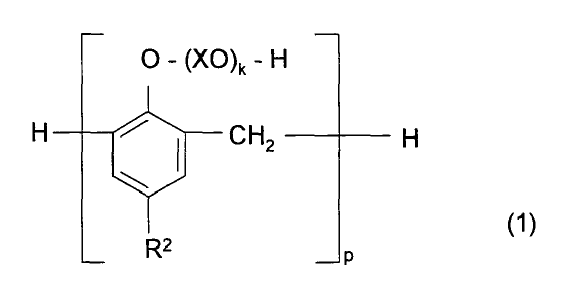 zusetzt, in der
R² einen geradkettigen oder verzweigten C₁- bis C₂₀-Alkylrest bezeichnet,
p für eine Zahl von 1 bis 75 steht,
X eine oder verschiedene 1,2-Alkyfengruppen mit 2 bis 4 C-Atomen, und
k eine Zahl von 1 bis 200 bedeuten.

Die mit dem erfindungsgemäßen Verfahren herstellbaren Polyoxyalkylenglykolmonoether und/oder -diether entsprechen im Allgemeinen der Formel 2

R-O-(AO)_{y}-R¹ (2).

Hierin bedeuten
- R: Wasserstoff, eine Kohlenwasserstoffgruppe mit 1 bis 24 Kohlenstoffatomen, oder eine Gruppe R*-C(O)-, wobei R* eine Kohlenwasserstoffgruppe mit 1 bis 24 Kohlenstoffatomen ist,
- R¹: eine Kohlenwasserstoffgruppe mit 1 bis 12 Kohlenstoffatomen,
- AO: eine Alkoxygruppe, und
- y: eine Zahl von 1 bis 200.
y steht vorzugsweise für eine Zahl von 2 bis 100, insbesondere 3 bis 50.

R kann aliphatischer oder aromatischer Natur sein. R kann gesättigt oder ungesättigt sein. Beispiele für R sind Alkylgruppen mit 1 bis 24 Kohlenstoffatomen, Alkenylgruppen mit 2 bis 24 Kohlenstoffatomen, Phenyl, Benzyl und Allyl. Vorzugsweise umfasst R 2 bis 18, insbesondere 4 bis 12 Kohlenstoffatome.

Steht in Formel 2 R für Wasserstoff, so handelt es sich bei diesen Verbindungen um Polyoxyalkylenglykolmonoether, die durch Alkylierung von Monoalkylenglykol, Dialkylenglykol oder höheren Alkylenglykolen erhältlich sind.

Steht in Formel 2 R für eine Kohlenwasserstoffgruppe mit 1 bis 24 Kohlenstoffatomen, so handelt es sich bei diesen Verbindungen um Polyoxyalkylenglykoldiether, die durch Alkylierung von Alkoxylaten von Monoalkoholen mit 1 bis 24, vorzugsweise 2 bis 18, insbesondere 4 bis 12 Kohlenstoffatomen erhältlich sind.

Steht in Formel 2 R für eine Gruppe R*-C(O)-, wobei R* eine Kohlenwasserstoffgruppe mit 1 bis 24 Kohlenstoffatomen ist, so handelt es sich bei diesen Verbindungen um Polyoxyalkylenglykoldiether, die durch Alkylierung von Alkoxylaten von Monocarbonsäuren erhältlich sind, wobei R* 1 bis 24, vorzugsweise 2 bis 18, insbesondere 4 bis 12 Kohlenstoffatome umfasst.

R¹ steht vorzugsweise für einen Rest, der aus Kohlenwasserstoffhalogeniden mit 1 bis 12, vorzugsweise 2 bis 8, insbesondere 4 bis 6 Kohlenstoffatomen durch Abstraktion des Halogenatoms abgeleitet ist. R¹ kann aliphatischer oder aromatischer Natur sein. R¹ kann gesättigt oder ungesättigt sein. Beispiele für R¹ sind Alkylgruppen mit 1 bis 12 Kohlenstoffatomen, Alkenylgruppen mit 2 bis 12 Kohlenstoffatomen, Phenyl, Benzyl, Allyl. Das Kohlenwasserstoffhalogenid ist das Alkylierungsmittel. Bevorzugte Halogenide sind Chloride.

AO steht für eine einheitliche oder eine gemischte Alkoxygruppe, die statistisch oder blockweise angeordnet sein kann, und die Ethoxy-, Propoxy- und/oder Butoxygruppen umfassen kann. In einer bevorzugten Ausführungsform umfasst AO wenigstens eine Propoxy- oder Butoxygruppe.

R² steht vorzugsweise für einen C₄- bis C₁₂-Alkylrest.

p steht vorzugsweise für eine Zahl von 2 bis 40.

k steht vorzugsweise für eine Zahl von 5 bis 150, insbesondere 10 bis 100.

Ein weiterer Gegenstand der Erfindung ist die Verwendung von Verbindungen der Formel 1 als Demulgator im erfindungsgemäßen Verfahren.

Die alkoxylierten Alkylphenol-Aldehydharze der Formel 1 sind nach bekannten Verfahren durch Kondensation der entsprechenden Alkylphenole mit Formaldehyd, d.h. mit 0,5 bis 1,5 Mol, bevorzugt 0,8 bis 1,2 Mol Formaldehyd pro Mol Alkylphenol zugänglich. Die Kondensation kann lösemittelfrei erfolgen, bevorzugt erfolgt sie jedoch in Gegenwart eines nicht oder nur teilweise wassermischbaren inerten organischen Lösemittels wie Mineralöle, Alkohole, Ether und ähnliches. Besonders bevorzugt sind Lösemittel, die mit Wasser Azeotrope bilden können. Als derartige Lösemittel werden insbesondere Aromaten wie Toluol, Xylol, Diethylbenzol, höher siedende kommerzielle Lösemittelgemische wie beispielsweise Solvent Naphtha oder Glymes (Polyethylenglykoldialkylether) eingesetzt. Die Kondensation erfolgt bevorzugt zwischen 70 und 200°C, insbesondere zwischen 90 und 160°C. Sie wird üblicherweise durch 0,05 bis 5 Gew.-% Basen oder Säuren katalysiert. Nach erfolgter Herstellung des Alkylphenol-Aldehydharzes wird dieses mit einem C₂- bis C₄-Alkylenoxid alkoxyliert, so dass das entstandene Alkoxylat 1 bis 200 Alkoxygruppen enthält.

Neben alkoxylierten Alkylphenol-Aldehydharzen können im erfindungsgemäßen Verfahren auch Co-Demulgatoren verwendet werden. Solche Co-Demulgatoren sind
a) Alkylenoxid-Blockpolymere basierend auf Alkoholen, Polyolen, Aminen und Aminoalkoholen
b) Vernetzte Alkylenoxid -Blockpolymere vom Typ a)
c) Alkoxylierte vernetzte Alkylenoxid -Blockpolymere vom Typ b)
d) Alkoxylierte Polyethylenimine
oder deren Mischungen.

Die Blockpolymere a) sind aus einer Verbindung, die 1 bis 30 Kohlenstoffatome und 1 bis 25 Hydroxylgruppen, Aminogruppen oder beides umfasst, durch deren blockweise Alkoxylierung mit mindestens 2 unterschiedlichen Blöcken von jeweils 1 bis 200 mol C₂- bis C₄-Alkylenoxid erhältlich.

Geeignete Blockpolymere a) entsprechen beispielsweise der Formel 3 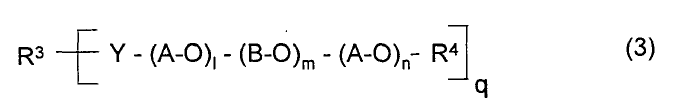 worin
- A, B: für verschiedene C₂- bis C₄-Alkylengruppen
- R³: für H oder einen Kohlenwasserstoffrest mit 1 bis 30 Kohlenstoffatomen, der Heteroatome umfassen kann
- R⁴: für H oder eine C₁- bis C₄-Alkylgruppe
- l, m: unabhängig voneinander für Zahlen von 1 bis 200
- n: für eine Zahl von 0 bis 200,
- q: für eine Zahl von 1 bis 25, und
- Y: für O oder NR⁵ steht, und
- R⁵: die gleiche Bedeutung wie R³ aufweist.

Steht Y für NR⁵, so ist es bevorzugt, dass die Verbindungen der Formel (3) mindestens zwei aktive Wasserstoffatome, d.h. zur Alkoxylierung geeignete Stellen aufweisen. Besonders bevorzugt sind dabei solche Verbindungen, in denen q gleich 2 oder größer als 2 ist, sowie solche Verbindungen in denen R³ und/oder R⁵ mindestens eine Hydroxylgruppe trägt.

R³ ist ein Kohlenwasserstoffrest mit 1 bis 30 Kohlenstoffatomen, der Heteroatome wie Sauerstoff und/oder Stickstoff umfassen kann. R³ kann substituiert sein, wobei die bevorzugten Substituenten Hydroxyl- und Aminogruppen sind. Die Substituenten von R³ können Alkoxygruppen der Formel -(A-O)ₗ-(B-O)ₘ-(A-O)ₙ- tragen, wobei A, B, l, m, n die oben angegebenen Bedeutungen haben. Die in diesen Alkoxygruppen enthaltenen Kohlenstoffatome zählen nicht zu den 1 bis 30 Kohlenstoffatomen, die R³ umfassen kann.

l, m und n stehen unabhängig voneinander für Zahlen zwischen 2 und 100. In einer bevorzugten Ausführungsform enthält die Alkoxykette -(A-O)ₗ-(B-O)ₘ-(A-O)ₙ- mehr als 30 mol-% Propylenoxidgruppen.

q steht vorzugsweise für eine Zahl von 2 bis 20, insbesondere von 3 bis 8.

Das Molekulargewicht der Verbindungen der Formel 3 liegt vorzugsweise zwischen 1000 und 30.000 g/mol.

In bevorzugter Ausführungsform handelt es sich bei den Verbindungen der Formel 3 um Alkylenoxidpolymere mit einer Molmasse von 1.500 bis 35.000, vorzugsweise 2.000 bis 15.000, erhalten durch Umsetzung eines Diols, Polyols oder Amins mit C₂-C₄-Alkenoxiden. Als Diole für die Alkylenoxidpolymere kommen folgende Produkte in Betracht:
1. Aliphatische Diole z.B. Ethylenglykol, 1,2-Propylenglykol, Butandiol-1,4, Dodecandiol-1,12, Diethylenglykol, Triethylenglykol, Dipropylenglykol, Polyethylenglykole mit relativen Molmassen bis ca. 20.000, Polypropylenglykole mit relativen Molmassen bis ca. 4.000, Polybutylenglykole mit relativen Molmassen bis ca. 4.000,
2. Ethylenoxid-Propylenoxid-Blockpolymere, die durch Oxethylierung eines Polypropylenoxids mit einer Molmasse von mindestens 600 hergestellt werden, wobei man vorzugsweise von einem Polypropylenoxid mit einer Molmasse von 600 bis 3.500 ausgeht. Das Propylenoxid kann auch teilweise durch Butylenoxid ersetzt werden. Der Anteil der Polyethylenoxidgruppen am Gesamtmolekül des Blockpolymers wird so gewählt, dass er mindestens 5, bevorzugt 10 - 80 % ausmacht,
3. Ethylenoxid-Butylenoxid-Blockpolymere, die durch Oxethylierung eines Polybutylenoxids mit einer Molmasse von mindestens 600 hergestellt werden, wobei man vorzugsweise von einem Polybutylenoxid mit einer Molmasse von 600 - 3.000 ausgeht; das Butylenoxid kann auch teilweise durch Propylenoxid ersetzt werden; der Anteil der Polyethylenoxidgruppen am Gesamtmolekül des Blockpolymers wird so gewählt, dass er mindestens 10 %, bevorzugt 10 bis 80 % beträgt.

Geeignete Polyole sind beispielsweise Glycerin, Diglycerin, Triglycerin, Polyglycerine, Trimethylolpropan, Pentaerythrit, Dipentaerythrit, Sorbitol, Mannitol und weitere reduzierte Zucker. Zur Herstellung solcher Blockpolymere geeignete Amine sind beispielsweise Ethylendiamin, Diethylentriamin, Triethylentetramin, Tetraethylenpentamin sowie die höheren Homologen, Triethanolamin, und Tris(hydroxymethyl)aminomethan.

Die unter a) angeführten Alkylenoxid -Blockpolymere können auch vernetzt werden. Die vernetzten Blockpolymere b) sind aus den Blockpolymeren a) durch Umsetzung mit Bi-, Tri- und Tetraglycidylethern, durch Veresterung mit mehrwertigen Dicarbonsäuren und deren Anhydriden sowie durch Reaktion mit mehrwertigen Isocyanaten erhältlich.

Folgende Vernetzer werden bevorzugt verwendet: Bisphenol-A-diglycidylether, Butan-1,4-dioldiglycidylether, Hexan-1,6-dioldiglycidylether, Ethylenglykoldiglycidylether, Cyclohexandimethanoldiglycidylether, Resorcindiglycidylether, Glycerindiglycidylether, Glycerintriglycidylether, Glycerinpropoxylattriglycidylether, Polyglycerinpolyglycidylether, *p*-Aminophenoltriglycidylether, Polypropylenglykoldiglycidylether, Pentaerythrittetraglycidylether, Sorbitolpolyglycidylether, Trimethylolpropantriglycidylether, Castoröltriglycidylether, Diaminobiphenyltetraglycidylether, Sojaölepoxid, Adipinsäure, Maleinsäure, Phthalsäure, Maleinsäureanhydrid, Bernsteinsäureanhydrid, Dodecylbernsteinsäureanhydrid, Phthalsäureanhydrid, Trimellitsäureanhydrid, Pyromellitsäureanhydrid, Toluoldiisoyanat, Diphenylmethandiisocyanat.

Die unter b) beschriebenen vernetzten Alkylenoxid -Blockpolymere können auch in alkoxylierter Form verwendet werden. Hierzu werden sie vorzugsweise mit 5 bis 700 g eines C₂- bis C₄-Alkylenoxids, insbesondere 30 bis 300 g, pro 100 g Produkt b) alkoxyliert. Besonders geeignet zur Alkoxylierung sind durch Umsetzung mit Glycidylethern erhaltene vernetzte Blockpolymere, im Speziellen mit Diglycidylethern vernetzte Blockpolymere.

Geeignete Demulgatoren d) sind Oligo- oder Polyethylenimine, die mit 1 bis 100 C₂- bis C₄-Alkylenoxidgruppen oder einer Mischung solcher Alkylenoxidgruppen pro freier NH-Gruppe alkoxyliert sind.

Die Vorstufe der alkoxylierten Oligo- und Polyethylenimine sind verzweigte, oligomere oder polymere Amine, in denen auf zwei C-Atome immer ein StickstoffAtom folgt. Das Verhältnis von primären zu sekundären zu tertiären Stickstoff-Atomen beträgt vorzugsweise - wie bei den entsprechenden im Handel befindlichen Produkten üblich - etwa 1 : 2 : 1. Als Polymere haben sie eine Molekulargewichtsverteilung. Im Rahmen der vorliegenden Erfindung werden dabei vorzugsweise diejenigen Typen eingesetzt, deren mittlere Molmassen (M_{w} gemessen mittels Lichtstreuung) größer als 15 000 g/mol ist. Folgende Formel 4 verdeutlicht den Aufbau handelsüblicher verzweigter Polyethylenimine, bei denen das Verhältnis von primären zu sekundären zu tertiären Stickstoff-Atomen etwa 1 : 2 : 1 beträgt:

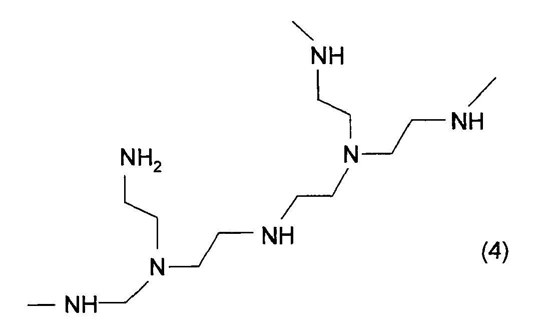

Das Oligo- oder Polyethylenimin wird, wie im Stand der Technik bekannt, mit C₂-C₄-Alkylenoxiden oder einer Mischung solcher Alkylenoxide alkoxyliert, so dass das alkoxylierte Oligo- oder Polyethylenimin einen bevorzugten Alkoxylierungsgrad von 2 bis 80 Alkylenoxideinheiten pro freier NH-Gruppe aufweist. Insbesondere werden die verwendeten alkoxylierten Oligo- oder Polyethylenimine durch sequentielle Alkoxylierung von Ethylenoxid, Propylenoxid und/oder Butylenoxid unter alkalischer Katalyse hergestellt. Dabei sind solche alkoxylierten Oligo- oder Polyethylenimine bevorzugt, die durch Alkoxylierung zuerst mit Propylenoxid (PO) und anschließend mit Ethylenoxid (EO) hergestellt werden. Folgende Strukturformeln veranschaulichen beispielhaft die Struktur eines bevorzugt verwendeten alkoxylierten Oligo- (5) oder Polyethylenimins (6): 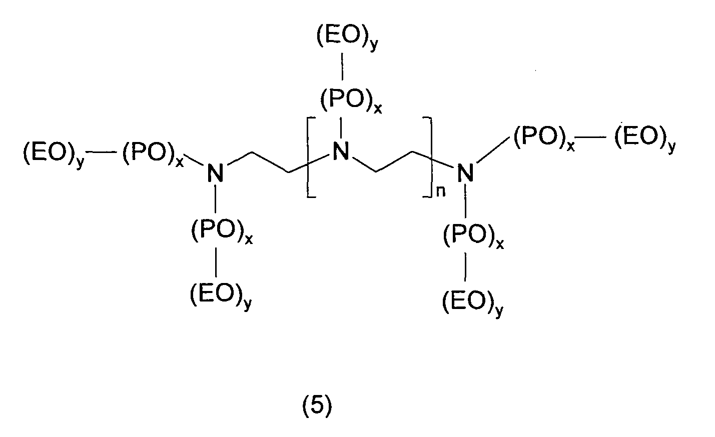 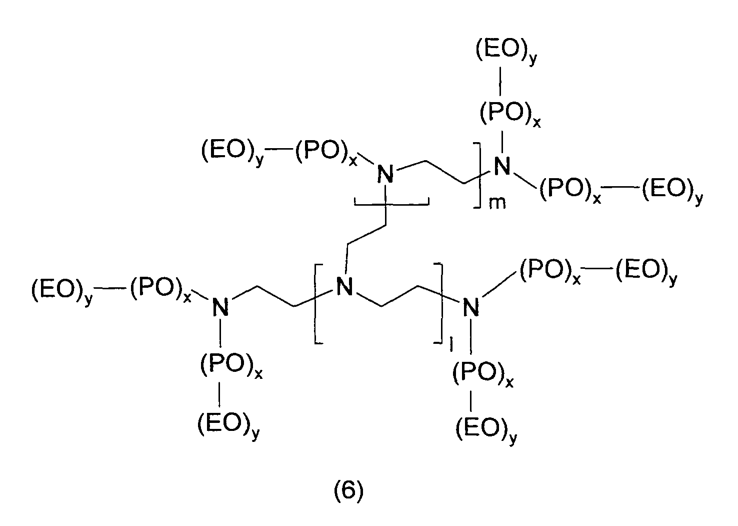 worin I, m und n unabhängig voneinander eine Zahl von 0 bis 1000 und (x + y) gleich 1 bis 1000 sind.

Die alkoxylierten Oligo- oder Polyethylenimine d) haben im Allgemeinen ein Molekulargewicht von mehr als 25.000 g/mol, vorzugsweise von 25.000 bis 1.000.000, insbesondere von 25.000 bis 250.000 g/mol, gemessen mittels Gelpermeationschromatographie (GPC) gegen Polyethylenglykol in Tetrahydrofuran.

Die erfindungsgemäßen Emulsionsspalter werden vorzugsweise in Lösung zugesetzt. Als Lösungsmittel dienen dabei entweder beliebige organische Lösungsmittel wie beispielsweise Alkane oder Aromaten, oder Wasser, oder aber auch das zu spaltende Produkt selbst. Es sollen bei diesem Verfahren vorzugsweise keine Rückstände des Emulsionsspalters und des Lösungsmittels im Polyalkylenglykolether sondern nur in der wässrigen Phase verbleiben. Daher werden bevorzugt wasserlösliche Spalter eingesetzt. Die Emulsionsspalter werden in Mengen von 0,0001 bis 5, insbesondere 0,001 bis 0,01 Gew.-% bezogen auf die Gesamtmenge der Reaktionsmischung (also Rohprodukt + Salzfracht + Wasser) zugesetzt.

Das erfindungsgemäße Verfahren wird nun an einigen Beispielen noch näher erläutert:

### Beispiele

### Beispiel 1 (Vergleich):

### Herstellung von Polypropylenglykolallylbutylether ohne Spalterzugabe

In einen Rührreaktor mit Temperatur- und Drucküberwachung werden unter Stickstoff 96,4 g eines Polypropylenglykolallylethers mit einer mittleren Molmasse von 1400 g/mol bei 80°C unter Rühren mit 6,43 g Natriumhydroxid versetzt. Anschließend tropft man 19,28 g Butylchlorid binnen einer Stunde zu. Der Reaktor wird zur Nachreaktion auf 120°C erhitzt und noch drei Stunden bei dieser Temperatur gerührt. Anschließend wird überschüssiges Butylchlorid abdestilliert und auf 90°C abgekühlt. Unter Rühren wird nun genau die Menge Wasser zugegeben, die erforderlich ist, um die Kochsalzmenge in Lösung zu bringen.

### Beispiel 2:

### Herstellung von Polypropylenglykolallylbutylether mit Spalterzugabe

Es wird wie im Beispiel 1 beschrieben verfahren, mit dem Unterschied, dass zur wässrigen Phasentrennung zusätzlich 50 ppm eines Erdölspalters der Formel 1 (alkoxyliertes Alkylphenol-Formaldehydharz) zugegeben werden.

### Beispiel 3 (Vergleich):

### Herstellung von Polyalkylenglykolallylbutylether ohne Spalterzugabe

In einen Rührreaktor mit Temperatur- und Drucküberwachung werden unter Stickstoff 96,5 g eines Polyalkylenglykol allylethers mit einer mittleren Molmasse von 1600 g/mol und einem Mischungsverhältnis Ethylenglykol zu Propylenglykol von 3 zu 1 bei 80°C unter Rühren mit 3,7 g Natriumhydroxid versetzt. Anschließend tropft man 11,6 g Butylchlorid langsam zu. Der Reaktor wird zur Nachreaktion auf 120°C erhitzt und drei Stunden bei dieser Temperatur gerührt. Anschließend wird überschüssiges Butylchlorid abdestilliert und auf 90°C abgekühlt. Unter Rühren wird exakt die Menge Wasser zugegeben, die erforderlich ist, um die Kochsalzmenge in Lösung zu bringen.

### Beispiel 4:

### Herstellung von Polyalkylenglykolalfylbutylether mit Spalterzugabe

Es wird wie im Beispiel 3 beschrieben verfahren, mit dem Unterschied, dass zur wässrigen Phasentrennung zusätzlich 50 ppm eines Erdölspalters der Formel 1 (alkoxyliertes Alkylphenol-Formaldehydharz) zugegeben werden.

### Beispiel 5 (Vergleich):

### Herstellung von Polyalkylenglykolallylmethylether ohne Spalterzugabe

In einen Rührreaktor mit Temperatur- und Drucküberwachung werden unter Stickstoff 99,6 g eines Polyalkylenglykol allylethers mit einer mittleren Molmasse von 2000 g/mol und einem Mischungsverhältnis Ethylenglykol zu Propylenglykol von 1 zu 1 bei 80°C unter Rühren mit 0,75 g Natriumhydroxid versetzt. Anschließend tropft man 0,95 g Methylchlorid langsam zu. Der Reaktor wird zur Nachreaktion auf 120°C erhitzt und weitere drei Stunden bei dieser Temperatur gerührt. Danach wird überschüssiges Butylchlorid abdestilliert und auf 90°C abgekühlt. Unter Rühren wird die Menge Wasser zugegeben, die erforderlich ist, um die Kochsalzmenge in Lösung zu bringen.

### Beispiel 6:

### Herstellung von Polyalkylenglykolallylmethylether mit Spalterzugabe

Es wird wie im Beispiel 5 beschrieben verfahren, mit dem Unterschied, dass zur wässrigen Phasentrennung zusätzlich 50 ppm eines Erdölspalters der Formel 1 (alkoxyliertes Alkylphenol-Formaldehydharz) zugegeben werden.

### Ergebnisse der Phasentrennversuche:

### Zur Bestimmung der Wirksamkeit des Emulsionsspalters wurde die

Wasserabscheidung aus der Rohproduktemulsion in Abhängigkeit von der Zeit bestimmt. Dazu wurden in Spaltgläser (konisch zulaufende, verschraubbare, graduierte Glasgefäße) jeweils 100 ml der Rohproduktemulsion eingefüllt. Danach wurden die Spaltergläser in ein Temperierbad gestellt und die Wasserabscheidung bei 80°C verfolgt.

**Tabelle 1:**

| | Wasserabscheidung [ml] pro Zeit | | | | | | | | | |
|---|---|---|---|---|---|---|---|---|---|---|
| Bsp. | 10 min | 30 min | 60 min | 2 h | 3 h | 4 h | 5 h | 6 h | 12 h | 24 h |
| 1 | 0 | 0 | 0 | 2 | 4 | 6,5 | 9 | 11,5 | 16,5 | vollst |
| 2 | 4 | 8 | 10 | 13 | 16 | 17,5 | vollst | | | |
| 3 | 0 | 0 | 0 | 0 | 1 | 1 | 2,5 | 4 | 7 | 12,5 |
| 4 | 1 | 2 | 4,5 | 8,5 | 12 | 13,5 | 16,5 | vollst | | |
| 5 | 0 | 0 | 0 | 0 | 0 | 0 | 0 | 1 | 3 | 4,5 |
| 6 | 0 | 3 | 5,5 | 8 | 12 | 14,5 | vollst | | | |

## Patentansprüche

1. Verfahren zur Herstellung von Polyoxyalkylenglykolmonoethern und/oder -diethern durch Umsetzung eines Alkoholats mit einem Alkylierungsmittel, **dadurch gekennzeichnet, dass** man der Mischung aus Alkoholat, Alkylierungsmittel und entstandenem Polyoxyalkylenglykolether Wasser und eine Verbindung der Formel 1 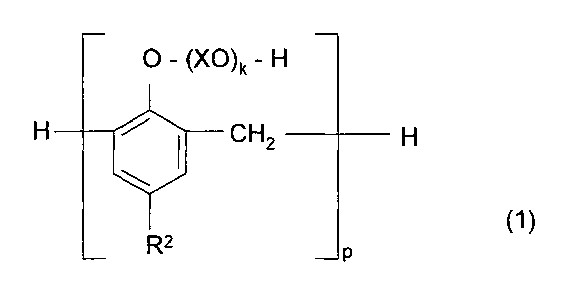 zusetzt, in der
R² einen geradkettigen oder verzweigten C₁- bis C₂₀-Alkylrest bezeichnet,
p für eine Zahl von 1 bis 75 steht,
X eine oder verschiedene 1,2-Alkylengruppen mit 2 bis 4 C-Atomen, und
k eine Zahl von 1 bis 200 bedeuten.

2. Verfahren nach Anspruch 1, worin die Polyoxyalkylenglykolmonoether und/oder -diether der Formel 2
R-O-(AO)_{y}-R¹ (2)
entsprechen, worin
R Wasserstoff, eine Kohlenwasserstoffgruppe mit 1 bis 24 Kohlenstoffatomen, oder eine Gruppe R*-C(O)-, wobei R* eine Kohlenwasserstoffgruppe mit 1 bis 24 Kohlenstoffatomen,
R¹ eine Kohlenwasserstoffgruppe mit 1 bis 12 Kohlenstoffatomen,
AO eine Alkoxygruppe, und
y eine Zahl von 1 bis 200 bedeuten.

3. Verfahren nach Anspruch 1 und/oder 2, worin y für eine Zahl von 2 bis 100 steht.

4. Verfahren nach einem oder mehreren der Ansprüche 1 bis 3, worin R für eine Gruppe ausgewählt aus
Alkylgruppen mit 1 bis 24 Kohlenstoffatomen,
Alkenylgruppen mit 2 bis 24 Kohlenstoffatomen,
Gruppen der Formel R*-C(O)-, wobei R* eine Kohlenwasserstoffgruppe mit 1 bis 24 Kohlenstoffatomen ist,
Phenyl-, Benzyl- oder Allylgruppen
steht.

5. Verfahren nach einem oder mehreren der Ansprüche 1 bis 4, worin R 4 bis 12 Kohlenstoffatome umfasst.

6. Verfahren nach einem oder mehreren der Ansprüche 1 bis 5, worin R¹ für eine Gruppe ausgewählt aus Alkylgruppen mit 1 bis 12 Kohlenstoffatomen, Alkenylgruppen mit 2 bis 12 Kohlenstoffatomen, Phenyl-, Benzyl- oder Allylgruppen steht.

7. Verfahren nach einem oder mehreren der Ansprüche 1 bis 6, worin R¹ 2 bis 8 Kohlenstoffatome umfasst.

8. Verfahren nach einem oder mehreren der Ansprüche 1 bis 7, worin AO wenigstens eine Propoxy- oder Butoxygruppe umfasst.

9. Verfahren nach einem oder mehreren der Ansprüche 1 bis 8, worin R² für einen C₄- bis C₁₂-Alkylrest steht.

10. Verfahren nach einem oder mehreren der Ansprüche 1 bis 9, worin p für eine Zahl von 2 bis 40 steht.

11. Verfahren nach einem oder mehreren der Ansprüche 1 bis 10, worin k für eine Zahl von 5 bis 150 steht.

12. Verfahren nach einem oder mehreren der Ansprüche 1 bis 11, worin zusätzlich mindestens ein Co-Demulgator ausgewählt aus
a) Alkylenoxid-Blockpolymeren basierend auf Alkoholen, Polyolen, Aminen und Aminoalkoholen
b) Vernetzten Alkylenoxid-Blockpolymeren vom Typ a)
c) Alkoxylierten vernetzten Alkylenoxid-Blockpolymeren vom Typ b)
d) Alkoxylierten Polyethyleniminen
oder deren Mischungen zur Anwendung kommt.
